# EUROPEAN PATENT APPLICATION

(11) **EP 4 496 017 A2**
(43) Date of publication of application: **22.01.2025**
(21) Application number: 24167874.7
(22) Date of filing: 29.03.2024
(51) Int. Cl.: H01M 4/02, H01M 4/131, H01M 4/485, H01M 4/505, H01M 4/525, H01M 4/62, H01M 4/66, H01M 10/0525

(54) **A CATHODE PLATE AND A LITHIUM ION BATTERY**

(30) Priority: 18.07.2023 CN 202310878729
(71) Applicant: Jiangsu Zenergy Battery Technologies Co., Ltd., Suzhou City, Jiangsu 215500 (CN)
(72) Inventor: HAN, Yanlin, Changshu Suzhou City, Jiangsu, 215500 (CN); LIU, Hongyong, Changshu Suzhou City, Jiangsu, 215500 (CN); YU, Zhexun, Changshu Suzhou City, Jiangsu, 215500 (CN)
(74) Representative: Studio Torta S.p.A.

(57) **Abstract**

The present disclosure discloses a cathode plate and a lithium ion battery, and relates to the field of battery technologies. The cathode plate includes a cathode current collector and a cathode active material layer provided on the cathode current collector, wherein the compact density of the cathode active material layer is a g/cm³, where 2.9 ≤ a ≤ 3.5; the areal density of the cathode active material layer is b g/cm², where 0.012 ≤ b ≤ 0.018; and the mass percentage of the conductive agent in the cathode active material layer is c, where 2.4% ≤ c ≤ 4.4%, and the cathode active material layer satisfies the formula below: 3.3 < a²×b/c < 5.5. The lithium ion battery prepared from the cathode plate can achieve excellent Direct Current Resistance (DCR) performance while ensuring the energy density of the battery cell.

## Description

### Technical Field

The present disclosure relates to the field of battery technologies, in particular to a cathode plate and a lithium ion battery.

### Background

With the development of modern society and the advance in science and technology, automobiles have gradually become the mainstream means of transportation. However, with the increase in the number of automobiles, traffic has become increasingly congested, and vertical takeoff and landing equipment has gradually attracted people's attention. Also, the electric vertical takeoff and landing (EVTOL) equipment has become the target of technological pursuit due to the annual increase in oil prices. Currently, lithium ion batteries have become the best choice for EVTOL drivers. Due to the uniqueness of EVTOL, there is a demand for lithium ion batteries that balance high energy density, high power, and long lifespan.

In view of the above, providing a lithium ion battery that maintains energy density while continuously providing high power output is an essential condition for promoting the development of the spacecraft industry.

### Summary

The technical problem to be solved by the present disclosure is to provide a cathode plate and a lithium ion battery. By controlling the areal density, compact density, and content of conductive agent of the cathode active material layer on the surface of the cathode plate, the lithium battery containing the cathode plate can have both high energy density and excellent DCR performance at the same time.

In order to solve the aforementioned technical problem, the present disclosure provides the following technical solutions:
A first aspect of the present disclosure provides a cathode plate, wherein the cathode plate comprises:
a cathode current collector, and
a cathode active material layer provided on the cathode current collector;
wherein the compact density of the cathode active material layer is a g/cm³, where 2.9 ≤ a ≤ 3.5; the areal density of the cathode active material layer is b g/cm², where 0.012 ≤ b ≤ 0.018; and the mass percentage of the conductive agent in the cathode active material layer is c, where 2.4% ≤ c ≤ 4.4%; and
the cathode active material layer satisfies the formula below: 3.3 < a²×b/c < 5.5.

Further, the compact density of the cathode active material layer is more preferably 3.1≤a≤3.3.

Further, the areal density of the cathode active material layer is more preferably 0.014≤b≤0.016.

Further, the mass percentage of the conductive agent in the cathode active material layer is more preferably 3%≤c≤4%.

Further, the cathode active material layer more preferably satisfies the formula below: 3.35 < a²×b/c < 5.

Further, the conductive agent in the cathode active material layer is a conductive carbon black.

Further, the cathode current collector is preferably aluminum foil or carbon-coated aluminum foil.

Further, the cathode active material contained in the cathode active material layer can be selected from one or more of lithium cobalt oxide, lithium nickel oxide, lithium manganese oxide, lithium nickel manganese oxide, lithium nickel cobalt manganese oxide, and lithium nickel cobalt aluminum oxide.

Further, the above cathode plate can be prepared by a wet coating method, which specifically includes the following steps:
mixing a cathode active material, a conductive agent, a binder, and a solvent evenly to obtain a cathode slurry;
uniformly coating the prepared cathode slurry on the cathode current collector, then oven-drying, and cold pressing to obtain the cathode plate.

A second aspect of the present disclosure provides a lithium ion battery, comprising the cathode plate as described in the first aspect.

Further, the lithium ion battery further includes a anode plate, which includes a anode current collector and a anode active material layer provided on the anode current collector; wherein the compact density of the anode active material layer is preferably 1.35 g/cm³; the areal density of the anode active material layer is preferably 0.0058 g/cm²; and the mass percentage of the conductive agent in the anode active material layer is preferably 1.6%.

Compared with the prior art, the disclosure has the following beneficial effects:
the present disclosure provides a cathode plate, and by reasonably controlling the value of compact density a, areal density b, and mass percentage of conductive agent c of the cathode active material layer in the cathode plate, and allowing the three parameters to satisfy a specific relationship equation 3.3 < a²×b/c < 5.5, the lithium ion batteries containing the aforementioned cathode plate can achieve both high energy density and high power performance.

### Detailed Description of the Embodiments

Unless otherwise defined, all technical and scientific terms as used herein have the same meanings as those commonly understood by those skilled in the technical field of the present disclosure. The terms as used herein in the specification of the present disclosure are only for the purpose of describing specific examples and are not intended to limit the present disclosure. The term "and/or" as used herein includes any and all combinations of one or more related listed items. The term "including" or "comprising" as described in the present disclosure means that in addition to the mentioned components, it may also include or comprise other components. The term "including" or "comprising" as described in the present disclosure may also be replaced by the closed term "being" or "consisting...of".

As stated in the background art, in order to promote the development of the spacecraft industry, there is an urgent need for a lithium ion battery that can maintain energy density while continuously providing high power output.

To solve the aforementioned technical problem, an embodiment of the present disclosure provides a cathode plate including a cathode current collector and a cathode active material layer provided on the cathode current collector.

Wherein, the compact density of the cathode active material layer is a g/cm³, where 2.9 ≤ a ≤ 3.5; the areal density of the cathode active material layer is b g/cm², where 0.012 ≤ b ≤ 0.018; and the mass percentage of the conductive agent in the cathode active material layer is c, where 2.4% ≤ c ≤ 4.4%; and the cathode active material layer satisfies the formula below: 3.3 < a²×b/c < 5.5. Wherein, the areal density disclosed herein refers to the areal density of the single-sided coating of the cathode active material layer on the cathode current collector.

Specifically, the inventors found that the compact density, areal density, and mass percentage of conductive agent of the cathode active material layer in the cathode plate have influence on both the energy density and the power performance of the battery cell, however the influence of which has a certain limitation and correlation.

When a lithium ion battery is discharged, the lithium ions move out of the anode active material and embed into the cathode active material, and the embedding process of the lithium ions in the positive electrode is related to the compact density, and too large or too small compact density can both affect the rate performance of the battery. If the compact density is too large, the interparticle distance of the raw material will decrease, the contact becomes tighter, and the corresponding electronic conductivity is enhanced. However, the liquid absorbability of the cathode active material layer will deteriorate with the increase of compact density, and the ion movement channels will be reduced or blocked accordingly, which is not conducive to the rapid movement of a large number of ions, leading to an increase in ion diffusion impedance and limiting its high current discharge, resulting in a decreased discharge voltage and a reduced discharge capacity. If the compact density is too small, the interparticle distance of the raw material will increase, the cathode active layer will have a strong liquid absorbability to electrolyte, and the corresponding ion channels will increase, which is conducive to the rapid movement of ions. However, the contact probability and the contact area between particles will reduce with the decrease of compact density, which is not conducive to electron conduction, leading to an increase in electron impedance, thereby affecting high current discharge and increasing discharge polarization. Therefore, it is necessary to control the compact density of the cathode active material layer (a, in g/cm³) within an appropriate range, i.e. 2.9 ≤ a ≤ 3.5, so that the raw material particles can fully contact with each other without blocking the ion movement channels, allowing high current discharge while ensuring good conductivity and fast ion motility, thereby reducing discharge polarization.

In some preferred embodiments, the range of value for the compact density of the cathode active material layer is more preferably 3.1≤a≤3.3, for example, a can be 3.1, 3.12, 3.13, 3.14, 3.15, 3.16, 3.17, 3.18, 3.19, 3.2, 3.25, 3.3, etc., including but non-limiting to the above values.

In addition, in the embodiments of the present disclosure, when the lithium ion battery is discharged, the lithium ions move out of the anode active material and embed into the cathode active material, and the transport distance of lithium ions is related to the areal density. If the areal density is too large, the transport distance of lithium ions increases with the increase of areal density, and the corresponding ion diffusion impedance increases, resulting in a decrease in the power performance of the battery cell, and if the areal density is too small, the power performance of the battery cell is improved, but as the proportion of auxiliary materials in the battery cell increases, the energy density of the battery cell will decrease. Therefore, it is necessary to control the areal density of the cathode active material layer (b, in g/cm²) within an appropriate range, i.e. 0.012≤b≤0.018, so that both good power performance and high energy density of the lithium ion batteries can be ensured.

In some preferred embodiments, the range of value for the areal density of the cathode active material layer is more preferably 0.014≤b≤0.016, for example, b can be 0.014, 0.0142, 0.0143, 0.0144, 0.0145, 0.0146, 0.0147, 0.0148, 0.0149, 0.015, 0.0155, 0.016, etc., including but non-limiting to the above values.

In the embodiments of the present disclosure, the content of conductive agent in the cathode active material layer will directly affect the electronic impedance of the cathode plate and the energy density of the battery. If the content of conductive agent in the cathode active material layer is too high, the electronic impedance of the cathode plate will decrease, which is conducive to improving the power performance of the battery cell. However, as the content of conductive agent increases, the proportion of cathode active material in the cathode active material layer will correspondingly decrease, thereby affecting the energy density of the battery cell. If the content of conductive agent in the cathode active material layer is too low, it is beneficial to improve the energy density of the battery cell, however, the electronic impedance increases with the decrease in content of conductive agent, which will affect the power performance of the battery cell. Therefore, it is necessary to control the mass percentage of the conductive agent in the cathode active material layer (c) within an appropriate range, i.e. 2.4%≤c≤4.4%, so that the lithium ion batteries can have both higher energy density and better power performance.

In some preferred embodiments, the range of value for the mass percentage of the conductive agent in the cathode active material layer is more preferably 3%≤c≤4%, for example, c can be 3.1%, 3.13%, 3.16%, 3.18%, 3.2%, 3.22%, 3.24%, 3.26%, 3.28%, 3.3%, 3.4%, 3.5%, 3.6%, 3.7%, 3.8%, 3.9%, etc., including but non-limiting to the above values.

By optimizing the compact density, areal density, or mass percentage of conductive agent of the cathode active material layer, the energy density or power performance of lithium ion batteries can be improved to a certain extent. However, there are significant limitations in simultaneously improving energy density and power performance due to various factors. It is found in the present disclosure that only if the above parameters are all within an appropriate range of values and satisfy the formula: 3.3 < a²×b/c < 5.5, it can make the lithium ion batteries containing the cathode plate have both high energy density and high power performance, and the above formula 3.3 < a²×b/c < 5.5 can be obtained through the following methods: (1) studying the logical positive and negative correlations between the magnitude of each factor and the energy density and power performance of the battery cell, for example, when a and b, within their respective preferred range of values, increase in the range of values, the corresponding energy density of the battery cell will increase and the power performance will deteriorate ( DCR value increases), while the energy density of the battery cell will decrease with the increase of c value (within the preferred range of values), however the power performance will be improved (DCR value decreases); (2) on the premise of the logical positive and negative correlations between the magnitude of each factor and the energy density and power performance of the battery cell, determining the power of the factor (e.g. square, and third power, etc.) and constructing a formula based on the importance of magnitude of values of each factor on the performance of the battery cell; and (3) based on the experimental data obtained by the method of exhaustion, adjusting the formula and producing the preferred range for the formula.

In some preferred embodiments, the cathode active material layer more preferably satisfies the formula below: 3.35 < a²×b/c < 5; for example, the range of value for a²×b/c can be 3.5-4.0, 4.0-4.3, 4.3-4.5 or 4.5-5.0.

In some preferred embodiments, the conductive agent in the cathode active material layer is a conductive carbon black (SP).

In some preferred embodiments, the cathode current collector is preferably aluminum foil or carbon-coated aluminum foil.

In some preferred embodiments, the cathode active material contained in the cathode active material layer can be selected from one or more of lithium cobalt oxide, lithium nickel oxide, lithium manganese oxide, lithium nickel manganese oxide, lithium nickel cobalt manganese oxide, and lithium nickel cobalt aluminum oxide, more preferably NCM series and NCA6 series cathode active materials, such as NCM8 series cathode active material LiNi_{0.83}Co_{0.12}Mn_{0.05}O₂.

In some preferred embodiments, the cathode active material layer comprises cathode active material LiNi_{0.83}Co_{0.12}Mn_{0.05}O₂, conductive agent (SP) and binder polyvinylidene fluoride(PVDF) in a mass ration of (95.4-95.6):(3.4-3.6):1; for example, the mass ration can be 95.5:3.5:1, 95.6:3.4:1, 95.4:3.6:1 etc.

The embodiment sections of the present disclosure also provide a preparation method of the aforementioned cathode plate, including the following steps:
mixing a cathode active material, a conductive agent, a binder, and a solvent evenly to obtain a cathode slurry;
uniformly coating the prepared cathode slurry on the cathode current collector, then oven-drying, and cold pressing to obtain the cathode plate.

In some preferred embodiments, the binder can be selected from one or more of polyacrylic acid, polyvinylidene fluoride, polyvinylidene difluoride, carboxymethylcellulose, or styrene-butadiene latex, and the solvent can be selected as N-methylpyrrolidone (NMP).

The embodiments of the present disclosure also provide a lithium ion battery including the aforementioned cathode plate.

Specifically, the lithium ion batteries include housing, a cathode plate, a separator, a anode plate, and an electrolyte. The cathode plate, separator, and anode plate are arranged in stack to form a bare battery cell in a stacking or winding way, the electrode tabs are ultrasonically welded, and the bare battery cell is placed in the battery shell, dried to remove moisture, injected with an electrolyte and then encapsulated to obtain the battery.

In some preferred embodiments, the anode plate includes a anode current collector and a anode active material layer provided on the anode current collector, wherein the anode current collector can be copper foil.

In some preferred embodiments, the compact density of the anode active material layer is preferably 1.35 g/cm³, the areal density of the anode active material layer is preferably 0.0058 g/cm², and the mass percentage of the conductive agent in the anode active material layer is preferably 1.6%.

In some preferred embodiments, the anode active material contained in the anode active material layer can be selected from one or more of graphite, soft carbon, hard carbon, mesocarbon microbeads, and silicon-based materials. However, the present disclosure is not limited to these materials, and other well-known anode active materials for lithium ion batteries can also be used.

In some preferred embodiments, the separator can be selected as polypropylene film and other separator materials that can be used for lithium ion batteries can also be used; the electrolyte includes a lithium salt and a solvent, wherein the lithium salt can be LiPF₆, LiBF₄, and LiTFSI, etc., the solvent can be selected from a mixed solvent composed of more of ethylene carbonate, propylene carbonate, butene carbonate, methyl ethyl carbonate, dimethyl carbonate, and diethyl carbonate, such as a mixed solvent composed of ethylene carbonate, methyl ethyl carbonate, and diethyl carbonate mixed in a volume ratio of 1:1:1.

The present disclosure will be further illustrated below in combination with examples, in order to enable those skilled in the art to better understand and implement the present disclosure. However, the examples listed herein are not intended to limit the present disclosure.

### Example 1

This example related to the preparation of a lithium ion battery, which specifically included the following steps:
(1) preparation of a cathode plate: mixing the cathode active material LiNi_{0.83}Co_{0.12}Mn_{0.05}O₂, the conductive agent conductive carbon black super p (SP) and the binder polyvinylidene fluoride (PVDF) in a mass ratio of 95.5:3.5:1, adding N-methylpyrrolidone (NMP) and stirring to obtain a uniformly mixed cathode slurry, evenly coating the cathode slurry on the cathode current collector, oven-drying, and cold pressing to obtain the cathode plate, wherein the compact density of the cathode active material layer formed by the cathode slurry on the surface of the cathode plate was 3.2 g/cm³, and the areal density was 0.015 g/cm²;
(2) Preparation of anode plate: mixing the anode active material, the conductive agent, and the binder in a mass ratio of 95.1:1.6:3.3, with the anode active material being obtained by mixing graphite and silicon oxide (SiO) in a mass ratio of 81:19, the conductive agent being obtained by mixing a conductive carbon black super p (SP) and carbon nanotube (CNT) in a mass ratio of 82:3 and the binder being obtained by mixing polyacrylic acid (PAA) and styrene-butadiene rubber (SBR) in a mass ratio of 2:1, adding deionized water while stirring to obtain a uniformly mixed anode slurry, coating the anode slurry on the anode current collector, oven-drying, and cold pressing to obtain the anode plate, wherein the compact density of the anode active material layer formed by the anode slurry on the surface of the anode plate was 1.35 g/cm³, and the areal density was 0.0058 g/cm²;
(3) selecting polyethylene film with a porosity of 45% as the separator;
(4) preparation of electrolyte: mixing ethylene carbonate, methyl ethyl carbonate, and diethyl carbonate in a volume ratio of 1:1:1 to obtain a mixed solvent, and adding lithium salt LiPF₆ to prepare an electrolyte with a LiPF₆ concentration of 1.2 mol/L;
(5) assembly of a lithium ion battery: arranging the cathode plate, the separator, and the anode plate in stack to form a bare battery cell in a winding way; placing the bare battery cell in the outer packaging housing, drying and then injecting with an electrolyte, and subjecting to processes such as vacuum packaging, standing, formation, and shaping, etc., to obtain the lithium ion battery.

### Example 2

This example related to the preparation of a lithium ion battery, which was the same as example 1 only except that the preparation of the cathode plate was different, and the preparation of the cathode plate was specifically as follows:
mixing the cathode active material LiNi_{0.83}Co_{0.12}Mn_{0.05}O₂, the conductive agent conductive carbon black super p (SP) and the binder polyvinylidene fluoride (PVDF) in a mass ratio of 95.6:3.4:1, adding N-methylpyrrolidone (NMP) and stirring to obtain a uniformly mixed cathode slurry, evenly coating the cathode slurry on the cathode current collector, oven-drying, and cold pressing to obtain the cathode plate, wherein the compact density of the cathode active material layer formed by the cathode slurry on the surface of the cathode plate was 3.3 g/cm³, and the areal density was 0.014 g/cm².

### Example 3

This example related to the preparation of a lithium ion battery, which was the same as example 1 only except that the preparation of the cathode plate was different, and the preparation of the cathode plate was specifically as follows:
mixing the cathode active material LiNi_{0.83}Co_{0.12}Mn_{0.05}O₂, the conductive agent conductive carbon black super p (SP) and the binder polyvinylidene fluoride (PVDF) in a mass ratio of 95.4:3.6:1, adding N-methylpyrrolidone (NMP) and stirring to obtain a uniformly mixed cathode slurry, evenly coating the cathode slurry on the cathode current collector, oven-drying, and cold pressing to obtain the cathode plate, wherein the compact density of the cathode active material layer formed by the cathode slurry on the surface of the cathode plate was 3.1 g/cm³, and the areal density was 0.016 g/cm².

### Example 4

This example related to the preparation of a lithium ion battery, which was the same as example 1 only except that the compact density of the cathode active material layer was 2.9 g/cm³.

### Example 5

This example related to the preparation of a lithium ion battery, which was the same as example 1 only except that the compact density of the cathode active material layer was 3.5 g/cm³.

### Example 6

This example related to the preparation of a lithium ion battery, which was the same as example 1 only except that the areal density of the cathode active material layer was 0.012 g/cm².

### Example 7

This example related to the preparation of a lithium ion battery, which was the same as example 1 only except that the areal density of the cathode active material layer was 0.018 g/cm².

### Example 8

This example related to the preparation of a lithium ion battery, which was the same as example 1 only except that the mass percentage of conductive agent of the cathode active material layer was 4%.

### Example 9

This example related to the preparation of a lithium ion battery, which was the same as example 1 only except that the mass percentage of conductive agent of the cathode active material layer was 4.4%.

### Comparative example 1

This comparative example related to the preparation of a lithium ion battery, which was the same as example 1 only except that the compact density of the cathode active material layer was 2.4 g/cm³.

### Comparative example 2

This comparative example related to the preparation of a lithium ion battery, which was the same as example 1 only except that the compact density of the cathode active material layer was 3.6 g/cm³.

### Comparative example 3

This comparative example related to the preparation of a lithium ion battery, which was the same as example 1 only except that the areal density of the cathode active material layer was 0.01 g/cm².

### Comparative example 4

This comparative example related to the preparation of a lithium ion battery, which was the same as example 1 only except that the areal density of the cathode active material layer was 0.02 g/cm².

### Comparative example 5

This comparative example related to the preparation of a lithium ion battery, which was the same as example 1 only except that the mass percentage of conductive agent in the cathode active material layer was 2%.

### Comparative example 6

This comparative example related to the preparation of a lithium ion battery, which was the same as example 1 only except that the mass percentage of conductive agent in the cathode active material layer was 5.5%.

### Comparative example 7

This comparative example related to the preparation of a lithium ion battery, which was the same as example 1 only except that the mass percentage of conductive agent of the cathode active material layer was different, which was 2.4%.

### Performance testing

The energy density and DCR performance of the lithium ion batteries prepared in the above examples and comparative examples were tested, and the specific operations were as follows:
Energy density testing: at 25 °C, fully charging the lithium ion batteries prepared in the examples and comparative examples at a rate of 1 C, then fully discharging at a rate of 1 C, recording the actual discharge energy, with the ratio of the actual discharge energy to the weight of the lithium ion battery (weighed at 25°C) being the actual energy density of the lithium ion battery.

DCR performance testing: at 25°C, fully charging the lithium ion batteries prepared in the examples and comparative examples at a constant current and constant voltage with 1 C current, standing for 5 minutes, then discharging at a constant current of 1 C for 30 minutes, and standing for 5 minutes, recording the voltage value at the end of the standing period as V1, and then discharging at a 2 C pulse for 30 seconds and recording the voltage value at the end of the pulse discharging as V2, with the ratio of the voltage difference between V1 and V2 to the 2 C current value being the 50% SOC discharge DCR of the battery;

The results of the above performance testing are as shown in Table 1 below:

**Table 1**

| Sample | Compact density (g/cm³) | Areal density (g/cm²) | Percentag e of conductive agent (%) | Capac ity (Ah) | a²×b/c | Energy density (Wh/Kg) | DCR (mΩ) |
|---|---|---|---|---|---|---|---|
| Example 1 | 3.2 | 0.015 | 3.5 | 60 | 4.39 | 255 | 1.15 |
| Example 2 | 3.3 | 0.014 | 3.4 | 60 | 4.48 | 253 | 1.12 |
| Example 3 | 3.1 | 0.016 | 3.6 | 60 | 4.27 | 257 | 1.18 |
| Example 4 | 2.9 | 0.015 | 3.5 | 54 | 3.60 | 253 | 1.32 |
| Example 5 | 3.5 | 0.015 | 3.5 | 61 | 5.25 | 256 | 1.31 |
| Example 6 | 3.2 | 0.012 | 3.5 | 56 | 3.51 | 247 | 1.08 |
| Example 7 | 3.2 | 0.018 | 3.5 | 61 | 5.27 | 260 | 1.29 |
| Example 8 | 3.2 | 0.015 | 4 | 59 | 3.84 | 253 | 1.13 |
| Example 9 | 3.2 | 0.015 | 4.4 | 58 | 3.49 | 251 | 1.11 |
| Comparati ve example 1 | 2.4 | 0.015 | 3.5 | 52 | 2.47 | 248 | 1.53 |
| Comparati ve example 2 | 3.6 | 0.015 | 3.5 | 60 | 5.55 | 256 | 1.58 |
| Comparati ve example 3 | 3.2 | 0.01 | 3.5 | 56 | 2.93 | 239 | 1.02 |
| Comparati | 3.2 | 0.02 | 3.5 | 61 | 5.85 | 262 | 1.55 |
| ve example 4 | | | | | | | |
| Comparati ve example 5 | 3.2 | 0.015 | 2 | 61 | 7.68 | 258 | 1.39 |
| Comparati ve example 6 | 3.2 | 0.015 | 5.5 | 59 | 2.79 | 248 | 1.09 |
| Comparati ve example 7 | 3.2 | 0.015 | 2.4 | 61 | 6.40 | 257 | 1.33 |

Comparing the data of examples 1 to 9 and comparative examples 1 to 7 in the table above, it can be seen that when the compact density of the cathode active material layer in the cathode plate is controlled between 2.9 and 3.5, the areal density is controlled between 0.012 and 0.018, and the mass percentage of conductive agent is controlled between 2.4% and 4.4%, and at the same time, the above parameters satisfy the relationship equation below: 3.3 < a²×b/c < 5.5, the lithium ion battery prepared from the cathode plate has both high energy density and excellent DCR performance, that is, excellent power performance.

From example 1 and comparative examples 1 and 2, it can be seen that too low compact density (for comparative example 1) or too high compact density (for comparative example 2) will affect the DCR performance of lithium ion batteries, and the value calculated from the relationship equation a²×b/c is not between 3.3 and 5.5, indicating poor overall performance of the batteries.

From example 1 and comparative examples 3 and 4, it can be seen that too low areal density (for comparative example 3) or too high areal density (for comparative example 4) will affect the energy density and DCR performance of lithium ion batteries. When the areal density is too low, the DCR value is small, indicating good power performance, but the energy density of the battery is low, which is only 239 Wh/Kg, and when the areal density is too high, the energy density of the battery will significantly increase, but if the DCR value is too high, the power performance is poor. In addition, when the energy density of the battery is too low or the DCR value is too large, the overall performance of the battery is poor, as shown by the value calculated from the relationship equation a²×b/c that is not between 3.3 and 5.5.

From example 1 and comparative examples 5 and 6, it can be seen that too low mass percentage of conductive agent (for comparative example 5) or too high mass percentage of conductive agent (for comparative example 6) in the cathode active material layer will affect the energy density and DCR performance of the lithium ion batteries. When the mass percentage of conductive agent in the cathode active material layer is too low, although it has a higher energy density, the DCR value is large, and the corresponding power performance is poor, and when the mass percentage of conductive agent in the cathode active material layer is too high, the DCR value significantly decreases, which is conducive to improving the power performance of the battery, but the energy density is low.

It can be known from comparative example 7 that although the compact density, areal density, and content of conductive agent of the cathode plate are all within the preferred range, calculated value from a²×b/c is 6.40, which does not satisfy the preferred range of values, the batteries constructed from such cathode plates have higher energy density, but the DCR value of the batteries is too high, resulting in relatively poor overall performance. However, further reducing the DCR value poses significant challenges in the field of batteries when having similar energy densities.

In addition, when the compact density of the cathode active material layer in the cathode plate is controlled between 3.1 and 3.3, the areal density is controlled between 0.014 and 0.016, and the mass percentage of conductive agent is controlled between 3% and 4%, and at the same time, the above parameters satisfy the relationship equation below: 3.35 < a²×b/c < 5, for example, the above examples 1, 2, 3, and 8, etc., can have both relatively high energy density and low DCR value, that is, the overall performance is better.

In summary, in order to improve the power performance of batteries on the premise that the lithium ion batteries are under an acceptable energy density, it is necessary to simultaneously optimize the compact density, areal density, and mass percentage of conductive agent of the cathode active material layer in the cathode plate, and only if the above parameters satisfy the formula: 3.3 < a²×b/c < 5.5 at the same time, the lithium ion batteries containing the cathode plate can have both high energy density and high power performance.

## Claims

1. A cathode plate, wherein, the cathode plate comprises:
a cathode current collector, and
a cathode active material layer provided on the cathode current collector;
wherein the compact density of the cathode active material layer is a g/cm³, where 2.9 ≤ a ≤ 3.5; the areal density of the cathode active material layer is b g/cm², where 0.012 ≤ b ≤ 0.018; and the mass percentage of the conductive agent in the cathode active material layer is c, where 2.4% ≤ c ≤ 4.4%; and
the cathode active material layer satisfies the formula below: 3.3 < a²×b/c < 5.5.

2. The cathode plate according to claim 1, wherein, the compact density of the cathode active material layer is 3.1≤a≤3.3.

3. The cathode plate according to claim 1, wherein, the areal density of the cathode active material layer is 0.014≤b≤0.016.

4. The cathode plate according to claim 1, wherein, the mass percentage of the conductive agent in the cathode active material layer is 3%≤c≤4%.

5. The cathode plate according to claim 1, wherein, the cathode active material layer satisfies the formula below: 3.35 < a²×b/c < 5.

6. The cathode plate according to claim 1, wherein, the conductive agent in the cathode active material layer is a conductive carbon black.

7. The cathode plate according to claim 1, wherein, the cathode current collector is aluminum foil or carbon-coated aluminum foil.

8. The cathode plate according to claim 1, wherein, the cathode active material comprised in the cathode active material layer is selected from one or more of lithium cobalt oxide, lithium nickel oxide, lithium manganese oxide, lithium nickel manganese oxide, lithium nickel cobalt manganese oxide, and lithium nickel cobalt aluminum oxide.

9. A lithium ion battery, wherein, the lithium ion battery comprises the cathode plate of any one of claims 1 to 8.

10. The lithium ion battery according to claim 9, wherein, the lithium ion battery further comprises a anode plate, which comprises a anode current collector and a anode active material layer provided on the anode current collector;
wherein the compact density of the anode active material layer is 1.35 g/cm³; the areal density of the anode active material layer is 0.0058 g/cm²; and the mass percentage of the conductive agent in the anode active material layer is 1.6%.
